# FASCICULE DE BREVET EUROPEEN

(11) **EP 2 878 960 B1**
(45) Date de publication et mention de la délivrance du brevet: **27.07.2016**
(21) Numéro de dépôt: 14195729.0
(22) Date de dépôt: 01.12.2014
(51) Int. Cl.: G01P 5/16, G01P 21/02, G01L 27/00

(54) **Dispositif de contrôle d'une sonde de mesure de pression d'un écoulement.**
Vorrichtung zur Kontrolle einer Druckmesssonde eines Flusses
Device for controlling a probe for measuring the pressure of a flow

(30) Priorité: 29.11.2013 FR 1302779
(43) Date de publication de la demande: 03.06.2015
(73) Titulaire: Thales, 92200 Neuilly Sur Seine (FR)
(72) Inventeur: Robert, François, 37390 CHANCEAUX SUR CHOISILLE (FR)
(74) Mandataire: Collet, Alain

(56) Documents cités:
- DE-A1-102004 033 956
- FR-A1- 2 959 822
- GB-A- 2 478 522
- US-B2- 6 378 377

## Description

L'invention concerne un dispositif de contrôle d'une sonde de mesure de pression d'un écoulement. L'invention trouve une utilité particulière dans le domaine des sondes de pression mises en oeuvre dans le domaine aéronautique.

En effet, le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt. Les pressions totale Pt et statique Ps fournissent le module de ce vecteur vitesse.

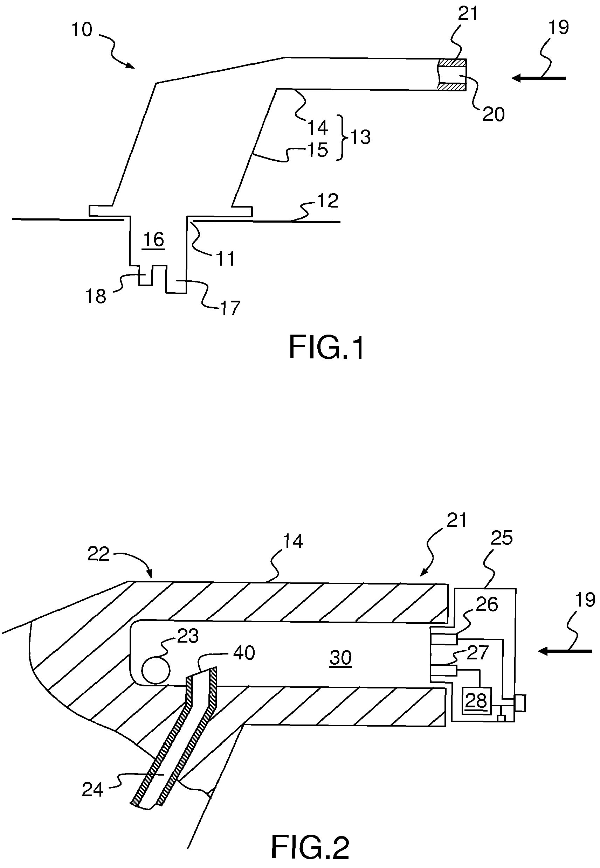

De manière connue, la mesure de la pression totale Pt peut être réalisée à l'aide d'un tube dit de Pitot. Il s'agit d'un tube ouvert à l'une de ses extrémités et obstrué à l'autre. L'extrémité ouverte du tube fait sensiblement face à l'écoulement. Le filet d'air situé en amont du tube est progressivement ralenti jusqu'à atteindre une vitesse quasi nulle à l'entrée du tube. Le ralentissement de la vitesse de ce filet d'air augmente sa pression. Cette pression augmentée forme la pression totale Pt de l'écoulement d'air. Le principe d'une telle sonde de mesure de pression totale est rappelé par la figure 1. La sonde 10 est destinée à être fixée en traversée d'une ouverture 11 réalisée dans la peau 12 d'un aéronef. La sonde 10 comprend une partie externe 13 à la peau 12 et formée par un tube de Pitot 14 porté par un mat 15. La sonde 10 comprend également une partie interne 16 comportant essentiellement un connecteur électrique 17 et un connecteur pneumatique 18. Le connecteur 17 permet de raccorder électriquement la sonde 10 à l'aéronef, par exemple pour raccorder des moyens de réchauffage pour le dégivrage de la sonde 10. Le connecteur 18 permet le raccordement pneumatique du tube de Pitot 14 à un capteur de pression ou autre dispositif de mesure, situé à l'intérieur de la peau 12 de l'aéronef. La sonde 10 est positionnée sur la peau 12 de l'aéronef de telle sorte que le tube de Pitot 14 soit orienté sensiblement suivant un axe longitudinal de l'aéronef, hors couche limite, pour que la direction de l'écoulement, matérialisée par une flèche 19, fasse sensiblement face à un orifice d'entrée 20 situé à une première extrémité 21 du tube de Pitot 14. Dans l'exemple représenté, le tube de Pitot 14 est fixe par rapport à la peau 12 de l'aéronef. Il est bien entendu possible de monter le tube de Pitot 14 sur un mat mobile comme par exemple une palette pouvant s'orienter dans l'axe de l'écoulement comme par exemple décrit dans le brevet publié sous le n° FR 2 665 539.

En pratique, l'écoulement d'air peut véhiculer des particules solides ou liquides, comme par exemple l'eau des nuages, susceptibles de pénétrer dans le tube de Pitot et de s'accumuler dans le tube au niveau de l'extrémité obstruée. Pour éviter qu'une telle accumulation ne vienne perturber la mesure de pression, on prévoit en général un ou plusieurs trous de purge et ainsi que des pièges à eau, pour éviter tout risque d'obstruction des canalisations chargées de transmettre la pression totale aux capteurs de pression situés à l'intérieur de la peau de l'aéronef ou aux instruments de la planche de bord de l'aéronef. Comme représenté sur la figure 2, le tube de Pitot 14 comprend ainsi, à proximité d'une extrémité 22, un trou de purge 23 permettant d'évacuer des particules susceptibles de pénétrer à l'intérieur du tube 14. Toujours au niveau de l'extrémité 22 du tube, un canal pneumatique 24 s'ouvre dans le tube 14 pour y former une prise de pression 40 au niveau de laquelle on cherche à mesurer la pression d'air. La prise de pression 40 est généralement construite de façon à éviter l'ingestion d'eau dans le tube 14 et former ainsi un piège à eau. Le canal 24 est par exemple relié à un capteur de pression non représenté sur la figure 2. Le capteur de pression permet de mesurer de façon effective la pression de l'air régnant à l'intérieur du tube 14 au niveau de son extrémité 22. Hormis le ou les trous de purge 23, dont les sections sont faibles par rapport à celle du tube 14, le tube 14 est fermé au niveau de son extrémité 22. La pression mesurée au niveau de cette extrémité représente donc la pression totale Pt de l'écoulement d'air.

Les trous de purge permettent d'évacuer les liquides et les éventuelles particules pouvant pénétrer dans le tube. Le ralentissement de l'air dans le tube n'est donc pas complet et la mesure de pression totale Pt s'en trouve altérée. Plus précisément, plus on cherche à éviter l'accumulation d'eau ou de particules de taille importante, plus on altère la mesure de pression totale en augmentant les dimensions ou le nombre de trous de purge. Inversement, plus on cherche à améliorer la mesure de pression totale Pt en diminuant les dimensions ou le nombre de trous de purge, plus le risque d'accumulation d'eau ou de particules augmente. Avec un tube de Pitot, on est donc tenu de réaliser un compromis entre qualité de la mesure de pression totale Pt et risque de perturbation de la mesure du fait de la pénétration d'eau, et de particules véhiculées par l'écoulement d'air où la mesure est réalisée.

Dans la vie opérationnelle des aéronefs, les trous de purges peuvent se polluer, du fait d'ingestion de poussière, d'insectes, de résidus de végétaux ou autres corps étrangers. Du fait de leur taille et de la position des tubes de Pitot sur le fuselage d'un aéronef, le contrôle périodique de l'intégrité des trous de purges est malaisé.

La vérification des trous de purge des tubes de Pitot est généralement réalisée de manière visuelle. L'opérateur chargé de la maintenance des avions inspecte le ou les trous de purge à l'aide d'une petite lampe. En cas d'observation de corps étrangers, la sonde est démontée, et ses circuits pneumatiques nettoyés. Cette opération est d'autant plus malaisée que l'avion est de grande taille. L'accès à la sonde et aux trous de purge dont le diamètre est généralement inférieur à 1 mm de diamètre est difficile.

On connait aussi de la demanderesse un dispositif de contrôle destiné à être connecté de manière temporaire à la sonde de mesure de pression, et permettant de contrôler à l'aide d'un émetteur et d'un récepteur acoustiques la non-obstruction des cavités internes et des trous de purges de la sonde. Le principe d'un tel dispositif est notamment décrit par le brevet publié sous la référence FR 2 959 822. Il est aussi rappelé par la figure 2 de la présente demande. Le dispositif de contrôle 25 comprend un émetteur 26 et un récepteur 27 destinés à être connectés à un volume interne 30 de la sonde, formé par l'intérieur du tube 14, le ou les trous de purge 23 et le canal 24. L'émetteur émet un signal acoustique se propageant dans le volume interne 30 et le récepteur est configuré pour capter un signal acoustique observé dans le volume interne 30. Le dispositif comprend aussi des moyens de comparaison 28 du signal acoustique observé dans le volume interne à un signal acoustique de référence, dans le but d'établir la présence de particule dans le volume interne.

Toutefois, ce dispositif de contrôle a pour inconvénient de connecter directement le récepteur acoustique avec le volume interne de la sonde de mesure de pression. Le récepteur acoustique est donc exposé aux liquides ou particules susceptibles d'être présents dans la sonde. Il en résulte un risque de pollution du récepteur acoustique, pouvant perturber l'efficacité du dispositif de contrôle. La présente invention vise à pallier cet inconvénient en proposant un dispositif de contrôle optimisé destiné à être connecté temporairement à une sonde de mesure de pression.

A cet effet, l'invention a pour objet un dispositif de contrôle dont le récepteur acoustique est positionné derrière la membrane du haut parleur émettant le signal acoustique dans le volume interne de la sonde. Plus précisément, l'invention porte sur un dispositif de contrôle d'une sonde de mesure de pression d'un écoulement, la sonde comprenant un volume interne et au moins un orifice communiquant avec l'extérieur du volume. Le dispositif comprend :
- un haut-parleur acoustique, comprenant une enceinte et une membrane refermant une ouverture de l'enceinte ; l'ouverture étant destinée à être connectée au volume interne de la sonde, de façon à ce que le haut-parleur émette un signal acoustique se propageant au travers de l'ouverture dans le volume interne,
- un récepteur acoustique disposé dans l'enceinte du haut-parleur permettant de capter un signal acoustique provenant de l'extérieur de l'enceinte et traversant la membrane,
- et des moyens de comparaison du signal acoustique observé dans l'enceinte à un signal acoustique de référence.

Avantageusement, le haut-parleur comprend des moyens d'étanchéité s'opposant aux infiltrations, dans l'enceinte au travers de l'ouverture, de liquide ou de particule présent dans le volume interne de la sonde.

Avantageusement, l'enceinte comprend un évent permettant de maintenir l'intérieur de l'enceinte à pression atmosphérique.

Avantageusement, le dispositif comprend des moyens d'information si un écart entre le signal acoustique capté et le signal de référence dépasse un seuil prédéfini.

Avantageusement, le signal acoustique émis balaye une bande de fréquence donnée et le signal acoustique capté est comparé sur la bande de fréquence à un spectre de référence.

Avantageusement, le dispositif est destiné à réaliser le contrôle d'une sonde de pression totale, de pression statique, de Pitot/statique ou d'incidence totalement ou partiellement pneumatique.

Avantageusement, la membrane est destinée à être connectée au volume interne au voisinage d'un orifice d'entrée d'un filet d'air de l'écoulement dans la sonde.

L'invention sera mieux comprise et d'autres avantages apparaîtront à la lecture de la description détaillée des modes de réalisation donnés à titre d'exemple sur les figures suivantes.
La figure 1, déjà présentée, représente une sonde de mesure de pression totale selon l'état connu de la technique,
la figure 2, déjà présentée, représente une vue partielle de la sonde de la figure 1 au voisinage de laquelle est disposé un dispositif de contrôle selon l'état connu de la technique,
la figure 3 représente un dispositif de contrôle selon l'invention,
la figure 4 représente une vue partielle de la sonde de la figure 1 au voisinage de laquelle est disposé un dispositif de contrôle selon l'invention.

Par souci de clarté, les mêmes éléments portent les mêmes repères dans les différentes figures.

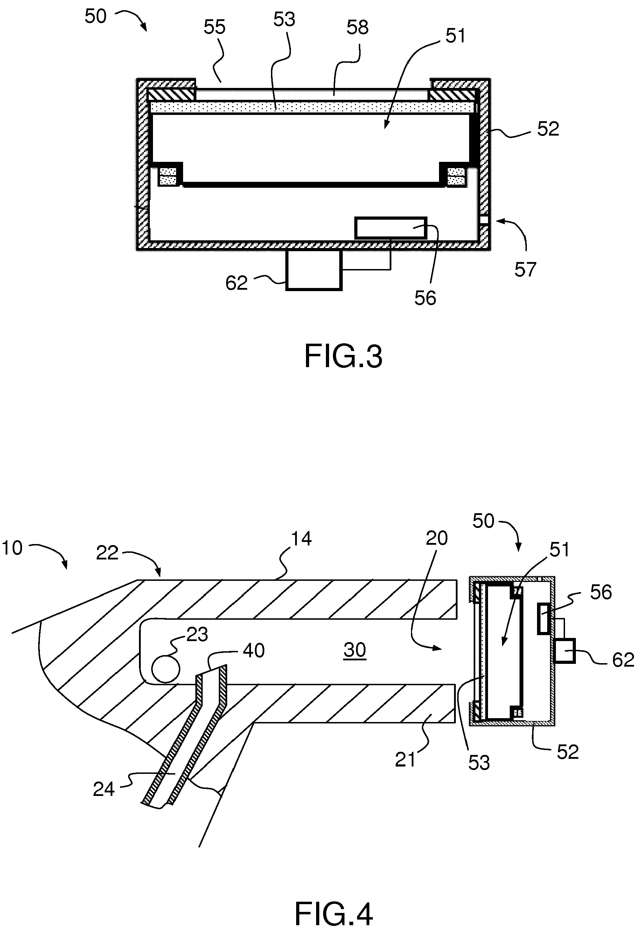

La figure 3 représente un dispositif de contrôle selon l'invention destiné à être connecté de manière temporaire à une sonde de mesure de pression d'un écoulement, lors d'une opération de maintenance de l'aéronef. L'invention est décrite en rapport à une sonde de mesure de pression totale, analogue à celle décrite précédemment par la figure 1. Il est bien entendu possible de la mettre en oeuvre pour une sonde de mesure de pression statique, pour une sonde Pitot/statique ou pour une sonde d'incidence totalement ou partiellement pneumatique. De manière générale, le dispositif selon l'invention est destiné au contrôle d'une sonde comprenant un volume interne et au moins un orifice communiquant avec l'extérieur du volume. Dans le cas de la sonde de pression totale précédemment décrite, le volume interne 30 de la sonde comprend l'intérieur du tube de Pitot 14, le ou les trous de purge 23 et le canal 24 par exemple relié à un capteur de pression. Dans une architecture répandue, la sonde comprend deux trous de purges aménagés en regard l'un de l'autre dans le tube de Pitot.

Comme représenté sur la figure 3, le dispositif de contrôle 50 comprend un haut-parleur acoustique 51 comprenant une enceinte 52 et une membrane 53. Le haut-parleur acoustique est un transducteur électromécanique capable de produire un signal acoustique à partir d'un signal électrique. De manière connue, le haut-parleur comprend un moteur (non représenté) transformant de l'énergie électrique en énergie mécanique transmise à la membrane 53 qui produit le signal acoustique en transmettant cette énergie mécanique à l'air ambiant. La membrane 53 est disposée dans l'enceinte, en refermant une ouverture 55 de l'enceinte 52. La membrane 53 referme l'ouverture en occupant toute la superficie de celle ci. Ainsi, le hautparleur est configuré pour émettre un signal acoustique qui se propage à l'extérieur de l'enceinte au travers de l'ouverture. Le signal acoustique se propage aussi à l'intérieur de l'enceinte, dans une cavité interne.

L'enceinte 52 peut aussi comprendre un évent 57 communiquant avec l'extérieur de l'enceinte pour permettre d'équilibrer les variations de pression dans la cavité interne. Autrement dit, l'évent permet de maintenir l'intérieur de l'enceinte à pression atmosphérique.

Le haut-parleur peut également comprendre des moyens d'étanchéité 58 s'opposant aux infiltrations dans l'enceinte 52 au travers de l'ouverture 55, de liquide ou de particule présent dans le volume interne de la sonde. Bien entendu, les moyens d'étanchéité 58 restent perméables à tout signal acoustique.

Le dispositif de contrôle 50 comprend aussi un récepteur acoustique 56 placé dans l'enceinte 52 du haut-parleur 51. Le récepteur permet de capter un signal acoustique observé dans la cavité interne de l'enceinte 52. Le récepteur n'est pas en contact direct avec l'extérieur de l'enceinte du haut-parleur 51.

La figure 4 représente le dispositif de contrôle connecté à une sonde de mesure de pression. La sonde de mesure de pression, représentée partiellement sur la figure 4, comprend notamment le tube de Pitot 14 précédemment décrit. Le dispositif est connecté à l'extrémité ouverte 21 de la sonde, de façon à ce que la membrane 53 du haut-parleur soit positionnée en regard de l'orifice d'entrée 20 du tube de Pitot. Autrement dit, l'ouverture 55 de l'enceinte 52 est destinée à être connectée au volume interne 30 de la sonde, de façon à ce que le haut-parleur émette un signal acoustique se propageant au travers de l'ouverture 55 dans le volume interne. Pour la connexion à la sonde, il est envisagé de disposer des moyens de fixation amovible sur l'enceinte, à proximité de l'ouverture 55, destinés à maintenir de manière temporaire le dispositif contre l'extrémité ouverte 21 de la sonde.

La forme géométrique du volume interne et les diverses connections de ce volume avec les autres parties du circuit pneumatique affectent le signal acoustique observé dans le volume interne de la sonde. Un signal acoustique émis par le haut-parleur 51 se propage dans le volume interne et est réfléchi par celui-ci. Le signal acoustique réfléchi se propage dans le volume interne vers la membrane. Il affecte le signal acoustique observé dans la cavité interne du haut-parleur. Autrement dit, le haut-parleur, qui constitue un générateur de vitesse acoustique, crée une onde acoustique affectée par le volume interne. L'impédance acoustique, définie comme le rapport de la pression sur la vitesse des particules d'air, mesurée à proximité du haut-parleur, est donc affectée par la géométrie du système. Encore autrement dit, l'impédance acoustique observée dans la cavité interne du haut-parleur (a proximité de celui-ci) connecté à la sonde est une image de l'impédance acoustique observée dans le volume interne de la sonde.

Le signal acoustique observé dans l'enceinte dépend donc d'éventuelles particules se trouvant dans le volume interne et notamment, lorsque le trou de purge 23 est obstrué. On peut définir un signal de référence que le récepteur 56 reçoit lorsque le volume interne est exempt de toute particule. Le dispositif de contrôle comprend par ailleurs, des moyens de comparaison 62 du signal de référence avec le signal acoustique observé dans l'enceinte lors de l'analyse de la sonde en cours de test. Ce signal de référence peut être défini sur une sonde 10 neuve ou après un contrôle visuel approfondi d'une sonde 10. Si le dispositif est utilisé pour une sonde 10 montée sur un aéronef, le signal de référence peut dépendre de l'aéronef lui-même et en particulier de la partie du circuit pneumatique n'appartenant pas à la sonde 10.

Un écart entre le signal observé et le signal de référence permet d'établir la présence de particule dans le volume interne. En cas de détection de particule une opération de maintenance sur la sonde 10 est nécessaire pour ôter les particules présentes. Au contraire, si l'écart n'est pas significatif, la sonde 10 est considérée comme opérationnelle. La réalisation d'un tel contrôle est très rapide à mettre en oeuvre. Ce contrôle peut être réalisé directement sur l'aéronef sans démontage de la sonde 10. Ce contrôle peut également être effectué lors d'une opération de maintenance de la sonde 10 afin de vérifier que les particules, notamment celle pouvant obstruer le trou de purge 23, ont bien été ôtées.

Avantageusement, le dispositif de contrôle 50 comprend des moyens d'information si un écart entre le signal observé et le signal de référence dépasse un seuil prédéfini. Le seuil prédéfini peut être stocké dans une mémoire du dispositif de contrôle. Le seuil peut être défini à l'aide d'essais en testant des tailles de particules différentes insérées dans le volume interne, à différents emplacements de celui-ci. Les moyens d'informations peuvent être formés par un voyant qu'un opérateur peut observer pendant une opération de contrôle. Les moyens d'informations peuvent également être déportés au moyen d'un connecteur du dispositif.

Lors d'une opération de contrôle au moyen du dispositif 25, on peut, par exemple, rechercher une fréquence de résonance du volume interne. Cette fréquence est fonction d'une éventuelle obstruction du trou de purge 23 ou de particules présentes dans le volume interne. Avantageusement le signal acoustique émis par l'émetteur peut être le signal acoustique obtenu en balayant une bande de fréquence donnée. Le signal acoustique observé par le récepteur est comparé sur la bande de fréquence à un spectre de référence. La bande de fréquence peut couvrir des fréquences acoustiques étendues adaptées au type de sonde et plus généralement au circuit pneumatique complet.

La configuration du dispositif intégrant le récepteur dans l'enceinte du haut-parleur est particulièrement avantageuse car elle permet de protéger le récepteur d'éventuelles infiltrations de liquide ou de particules présents dans la sonde. En mettant en oeuvre des moyens d'étanchéité s'opposant aux infiltrations au travers de l'ouverture, et en aménageant un évent de faible dimension et positionné à distance de la connexion avec la sonde, le dispositif est efficacement protégé des risques de pollution du récepteur acoustique par la sonde.

## Revendications

1. Dispositif de contrôle d'une sonde (10) de mesure de pression d'un écoulement, la sonde (10) comprenant un volume interne (30) et au moins un orifice (23) communiquant avec l'extérieur du volume (30), le dispositif comprenant :
• un haut-parleur acoustique (51), comprenant une enceinte (52) et une membrane (53) refermant une ouverture (55) de l'enceinte (52) ; l'ouverture (55) étant destinée à être connectée au volume interne (30) de la sonde (10), de façon à ce que le haut-parleur (51) émette un signal acoustique se propageant au travers de l'ouverture (55) dans le volume interne (30),
• un récepteur acoustique (56) disposé dans l'enceinte (52) du hautparleur (51) permettant de capter un signal acoustique provenant de l'extérieur de l'enceinte (52) et traversant la membrane (53),
• et des moyens de comparaison (62) du signal acoustique observé dans l'enceinte (52) à un signal acoustique de référence.

2. Dispositif selon la revendication 1, dont le haut-parleur (51) comprend des moyens d'étanchéité s'opposant aux infiltrations, dans l'enceinte (52) au travers de l'ouverture (55), de liquide ou de particule présent dans le volume interne de la sonde (10).

3. Dispositif selon l'une des revendications 1 ou 2, dont l'enceinte (52) comprend un évent (57) permettant de maintenir l'intérieur de l'enceinte (52) à pression atmosphérique.

4. Dispositif selon l'une des revendications précédentes, comprenant des moyens d'information (29) si un écart entre le signal acoustique capté et le signal de référence dépasse un seuil prédéfini.

5. Dispositif selon l'une des revendications précédentes, dont le signal acoustique émis balaye une bande de fréquence donnée et dont le signal acoustique capté est comparé sur la bande de fréquence à un spectre de référence.

6. Dispositif selon l'une des revendications précédentes, **caractérisé en ce qu'**il est destiné à réaliser le contrôle d'une sonde de pression totale (10), de pression statique, de Pitot/statique ou d'incidence totalement ou partiellement pneumatique.

7. Dispositif selon l'une des revendications précédentes, **caractérisé en ce que** la membrane (53) est destinée à être connectée au volume interne (30) au voisinage d'un orifice d'entrée (20) d'un filet d'air de l'écoulement dans la sonde (10).

## Patentansprüche

1. Vorrichtung zum Steuern einer Sonde (10) zum Messen des Drucks eines Flusses, wobei die Sonde (10) ein Innenvolumen (30) und wenigstens ein Loch (23) aufweist, das mit der Außenseite des Volumens (30) in Verbindung ist, wobei die Vorrichtung Folgendes umfasst:
• einen akustischen Lautsprecher (51), der eine Box (52) und eine Membran (53) umfasst, die eine Öffnung (55) in der Box (52) verschließt; wobei die Öffnung (55) zum Verbinden mit dem Innenvolumen (30) der Sonde (10) bestimmt ist, so dass der Lautsprecher (51) ein akustisches Signal aussendet, das sich durch die Öffnung (55) im Innenvolumen (30) ausbreitet,
• einen akustischen Empfänger (56), der in der Box (52) des Lautsprechers (51) angeordnet ist und die Erfassung eines akustischen Signals zulässt, das von der Außenseite der Box (52) kommt und die Membran (53) durchquert,
• und Mittel (62) zum Vergleichen des in der Box (52) beobachteten akustischen Signals mit einem akustischen Referenzsignal.

2. Vorrichtung nach Anspruch 1, deren Lautsprecher (51) Dichtungsmittel umfasst, die dem Eindringen von im Innenvolumen der Sonde (10) vorhandener/n Flüssigkeit oder Partikeln in die Box (52) durch die Öffnung (55) entgegenwirken.

3. Vorrichtung nach Anspruch 1 oder 2, deren Box (52) einen Abzug (57) aufweist, der es zulässt, das Innere der Box (52) auf atmosphärischem Druck zu halten.

4. Vorrichtung nach einem der vorherigen Ansprüche, die Informationsmittel (29) umfasst, wenn ein Abstand zwischen dem erfassten akustischen Signal und dem Referenzsignal eine vordefinierte Schwelle übersteigt.

5. Vorrichtung nach einem der vorherigen Ansprüche, deren emittiertes akustisches Signal ein gegebenes Frequenzband abtastet und deren erfasstes akustisches Signal auf dem Frequenzband mit einem Referenzspektrum verglichen wird.

6. Vorrichtung nach einem der vorherigen Ansprüche, **dadurch gekennzeichnet, dass** sie dazu bestimmt ist, die Steuerung einer pneumatischen oder teilpneumatischen Sonde für Gesamtdruck (10), für statischen Druck, für Pitot-/statischen Druck oder für den Einfall zu realisieren.

7. Vorrichtung nach einem der vorherigen Ansprüche, **dadurch gekennzeichnet, dass** die Membran (53) zum Verbinden mit dem Innenvolumen (30) in der Nähe eines Eintrittslochs (20) eines Luftstroms des Flusses in die Sonde (10) bestimmt ist.

## Claims

1. Device for controlling a pressure measuring probe (10) for a flow, the probe (10) comprising an internal volume (30) and at least one opening (23) which communicates with the outer side of the volume (30), the device comprising:
• an acoustic loudspeaker (51) comprising a chamber (52) and a membrane (53) which closes an opening (55) of the chamber (52); the opening (55) being intended to be connected to the internal volume (30) of the probe (10) so that the loudspeaker (51) transmits an acoustic signal which is propagated through the opening (55) into the internal volume (30),
• an acoustic receiver (56) which is arranged in the chamber (52) of the loudspeaker (51), allowing acquisition of an acoustic signal which is from outside the chamber (52) and which passes through the membrane (53),
• and comparison means (62) for the acoustic signal observed in the chamber (52) with an acoustic reference signal.

2. Device according to claim 1, of which the loudspeaker (51) comprises sealing means which act counter to the introduction, in the chamber (52) through the opening (55), of liquid or particles present in the internal volume of the probe (10).

3. Device according to either claim 1 or claim 2, of which the chamber (52) comprises a vent (57) which allows the interior of the chamber (52) to be kept at atmospheric pressure.

4. Device according to any one of the preceding claims, comprising information means (29) if a deviation between the acoustic signal acquired and the reference signal exceeds a predefined threshold.

5. Device according to any one of the preceding claims, of which the acoustic signal transmitted scans a given frequency band and of which the acoustic signal acquired is compared on the frequency band with a reference spectrum.

6. Device according to any one of the preceding claims, **characterised in that** it is intended to bring about the control of a total pressure probe (10), static pressure probe, Pitot/static probe or incidence probe which is completely or partially pneumatic.

7. Device according to any one of the preceding claims, **characterised in that** the membrane (53) is intended to be connected to the internal volume (30) in the region of an inlet hole (20) of an air flow of the flow into the probe (10).
